# EUROPÄISCHE PATENTSCHRIFT

(11) **EP 3 035 714 B1**
(45) Veröffentlichungstag und Bekanntmachung des Hinweises auf die Patenterteilung: **17.04.2019**
(21) Anmeldenummer: 14199477.2
(22) Anmeldetag: 19.12.2014
(51) Int. Cl.: H04W 4/02, H04W 4/90

(54) **Verfahren zur Notfallbenachrichtigung, Notfall-Kommunikationseinrichtung und Empfangseinrichtung**
Method for emergency messaging, emergency communication device and receiving device
Procédé de notification d'urgence, dispositif de notification d'urgence et dispositif de réception

(43) Veröffentlichungstag der Anmeldung: 22.06.2016
(73) Patentinhaber: Deutsche Telekom AG, 53113 Bonn (DE)
(72) Erfinder: Witych, Michael, 53227 Bonn (DE)
(74) Vertreter: Blumbach · Zinngrebe Patent- und Rechtsanwälte

(56) Entgegenhaltungen:
- EP-A1- 1 416 745
- WO-A1-99/34629
- US-B1- 6 324 392

## Beschreibung

Die Erfindung betrifft allgemein die Benachrichtigung bei einem Notfall, und insbesondere ein Verfahren zur Notfallbenachrichtigung sowie eine bewegliche, zur Kommunikation über ein Kommunikationsnetzwerk ausgebildete Notfall-Kommunikationseinrichtung und eine zugeordnete Empfangseinrichtung.

Sogenannte SAR-Dienste (Search And Rescue), d.h. Such- und Rettungsdienste für Notfälle verwenden zur Alarmierung Notrufbaken, auch als EPIRB (Emergency Position-Indicating Radio Beacon) bezeichnet, welche als kleine Funksender ausgebildet sind und mit Hilfe von Satelliten geortet werden können. Das Satellitensystem COSPAS/SARSAT umfasst heute unter anderem sechs polumlaufende Wettersatelliten, die die international für Notrufbaken vereinbarte Notfrequenz 406 MHz abhören. Signale, die auf dieser Frequenz empfangen werden, werden von den Satelliten zwischengespeichert und an eine Bodenstation weitergeleitet. Mit Hilfe der durch den Dopplereffekt bedingten Frequenzänderung kann durch mehrere Messungen die ungefähre Position der Signalquelle auf ca. 1 bis 3 Seemeilen genau bestimmt werden. Wenn die sendende Notfunkbake einen integrierten GPS-Empfänger aufweist, kann die hiermit ermittelte Position im Notsignal mit gesendet werden, so dass die Ortung mit GPS-Genauigkeit, d.h. auf etwa 10 bis 100 m genau, ermöglicht wird. In der Regel senden Notrufbaken im Notsignal eine Identitätsinformation mit, so dass Falschalarme von der Leitstelle gegebenenfalls schon vor der Einleitung einer Rettungsaktion durch Rückfragen geklärt werden können, sofern der Besitzer der Notrufbake bei deren Kauf Kontaktinformationen angegeben hat und diese bei der Leitstelle hinterlegt sind.

Eine Notrufbake kann zudem so ausgerüstet sein, dass sie zusätzlich zu dem Alarmierungssignal ein Peilsignal, typischerweise auf der Frequenz 121,5 MHz, aussendet, welches beispielsweise einem vorbeifliegenden Rettungs-Flugzeug ein Einpeilen auf die Notposition ermöglicht.

Zum Auffinden von Lawinenopfern ist der Einsatz von Lawinenverschüttetensuchgeräten, oder kurz LVS-Geräten, bekannt, die wahlweise in einem Sende- oder Suchbetrieb betrieben werden können, wobei ein LVS-Gerät im Sendebetrieb periodisch in Abständen ein schwaches Funksignal, typischerweise auf einer Trägerfrequenz von 457 kHz, aussendet, welches von einem LVS-Gerät im Suchbetrieb empfangen werden kann, um Entfernung und Richtung des sendenden LVS-Gerätes zu bestimmen.

Für Notfälle im häuslichen Umfeld sind Hausnotrufsysteme bekannt, bei welchen ein beweglicher Notrufsender einen Gesprächsverbindungsaufbau zu einer Zentrale eines Dienstanbieters durch eine mit einem Festnetz oder einem Mobilfunknetz verbundene Basisstation auslösen kann, wobei die Basisstation in der Regel mit einer sehr empfindlichen Freisprecheinrichtung ausgerüstet ist, um auch dann eine Kommunikation zu ermöglichen, wenn sich die hilfebedürftige Person entfernt von der Basisstation befindet.

Die Veröffentlichungen EP1416745, WO9934629 und US6324392 offenbaren Notfallkommunikationseinrichtungen, bei denen ein Notruf über verschiedene Kommunikationsnetze abgesetzt werden kann und wo auch Ortsinformationen über den betreffenden Notfall übertragen werden können.

Soweit die beschriebenen Systeme von der Nutzung eines Kommunikationsnetzes abhängen, weisen diese den Nachteil auf, dass systembedingt ein Zeitverzug bei der Notfallbenachrichtigung auftreten und zudem das Kommunikationsnetz im Bedarfsfall gestört sein kann. Ferner ist bei den beschriebenen Systemen nachteilig, dass für die Notfallbenachrichtigung jeweils ein zusätzliches Gerät mitgeführt werden muss.

Der Erfindung liegt die Aufgabe zugrunde, einen Weg aufzuzeigen, wie auf einfache und flexible Weise eine Notfall-Benachrichtigung durchgeführt werden kann. Eine weitere Aufgabe der Erfindung kann darin gesehen werden, einen Weg aufzuzeigen, wie Ortsinformationen, die für eine Navigation zu einem Notfallort einsetzbar sind, in vereinfachter und/oder verbesserter Weise bereitgestellt werden können. Eine nochmals weitere Aufgabe der Erfindung kann darin gesehen werden, eine Notfall-Benachrichtigung für einen neuen oder geänderten Zweck einzusetzen.

Diese Aufgabe wird durch ein Verfahren gemäß Anspruch 1, sowie durch eine Notfall-Kommunikationseinrichtung und eine Empfangseinrichtung gemäß Anspruch 13 gelöst. Vorteilhafte Ausführungsformen und Weiterbildungen sind in den jeweiligen abhängigen Ansprüchen angegeben.

Dementsprechend sieht die Erfindung ein Verfahren zur Notfallbenachrichtigung vor, welches das Bereitstellen wenigstens einer zur Kommunikation über ein Kommunikationsnetzwerk ausgebildeten, beweglichen Notfall-Kommunikationseinrichtung umfasst, wobei diese einen Notfallsender umfasst, der zum Aussenden eines von dem Kommunikations-Netzwerk unabhängigen Notfall-Signals ausgebildet ist. Das Kommunikationsnetzwerk ist vorzugsweise ein Mobilfunknetz und die Notfall-Kommunikationseinrichtung ist vorzugsweise ein zur Kommunikation über das Mobilfunknetz ausgebildetes Endgerät, beispielsweise ein Smartphone.

Unter Ansprechen auf eine Aktivierung des Notfallsenders wird durch den Notfallsender ein Notfall-Signal ausgesendet, welches durch wenigstens eine Empfangseinrichtung empfangen wird. In Abhängigkeit des empfangenen Notfall-Signals wird durch die Empfangseinrichtung eine relative Ortsinformation der beweglichen Notfall-Kommunikationseinrichtung relativ zur Empfangseinrichtung ermittelt.

Ein Kerngedanke der Erfindung besteht somit darin, eine zur Kommunikation über ein Kommunikationsnetzwerk ausgebildete, bewegliche Kommunikationseinrichtung, zum Beispiel ein mobilfunkfähiges Endgerät, insbesondere ein Smartphone, mit einem Notfallsender auszustatten, welcher zum Aussenden eines von dem Kommunikationsnetzwerk unabhängigen Notfall-Signals ausgebildet ist. Auf diese Weise kann vorteilhaft ein Gerät, welches heutzutage von einem Großteil der Bevölkerung ständig mitgeführt wird, um eine Funktion zur Notfallbenachrichtigung erweitert werden, die von der Verfügbarkeit des Kommunikationsnetzwerks unabhängig ist.

Die durch die Empfangseinrichtung ermittelten relativen Ortsinformationen sind insbesondere für eine Navigation zu der sendenden Notfall-Kommunikationseinrichtung einsetzbar und umfassen zu diesem Zweck vorteilhaft eine Richtungsinformation und/oder eine Entfernungsinformation. In einer vorteilhaften Ausführungsform umfasst das Ermitteln der relativen Ortsinformation durch die Empfangseinrichtung das Durchführen einer Funkpeilung in Abhängigkeit des empfangenen Notfall-Signals, wobei durch die Funkpeilung insbesondere eine Richtungsinformation ermittelt wird, d.h. die Richtung von der Empfangseinrichtung zu der Notfall-Kommunikationseinrichtung.

Zum Durchführen der Funkpeilung können verschiedene Methoden zum Einsatz kommen. So kann beispielsweise eine Maximum- oder Minimumpeilung mittels einer in der Empfangseinrichtung angeordneten Antenne mit Richtcharakteristik erfolgen. Weitere einsetzbare Funkpeilungsmethoden sind beispielsweise die Interferrometerpeilung und die Dopplerpeilung, wobei die Empfangseinrichtung bei Einsatz dieser Methoden jeweils entsprechend ausgebildet ist, d.h. insbesondere mehrere auf geeignete Weise angeordnete Empfangsantennen aufweist.

Eine Entfernung zwischen der Empfangseinrichtung und der Notfall-Kommunikationseinrichtung kann im einfachsten Fall in Abhängigkeit der Signalstärke des empfangenen Notfall-Signals erfolgen. Zu diesem Zweck kann vorteilhaft vorgesehen sein, dass die Notfall-Kommunikationseinrichtung das Notfall-Signal mit einer fest vorgegebenen Signalstärke aussendet. Denkbar wäre auch eine Ermittlung der Entfernung mittels einer Laufzeitmessung, bei welcher das Notfall-Signal eine Zeitinformation umfasst, insbesondere eine Information über den Zeitpunkt, zu dem das Notfall-Signal ausgesandt wurde. Damit die Empfangseinrichtung aus dieser Information eine Entfernung bestimmen kann, müssen die Notfall-Kommunikationseinrichtung und die Empfangseinrichtung synchronisierte Zeitgeber aufweisen. Dies kann dadurch erreicht werden, dass jeder Zeitgeber mit einem Zeitnormal synchronisiert wird. Eine Synchronisation des jeweiligen, in der Notfall-Kommunikationseinrichtung bzw. in der Empfangseinrichtung angeordneten Zeitgebers mit einem Zeitnormal kann derart erfolgen, dass ein Signal von einem ortsfesten Zeitzeichensender mit bekannter Position empfangen wird, wobei die von dem Zeitzeichensender empfangene Zeitinformation um die Laufzeit vom Zeitzeichensender zu der Notfall-Kommunikationseinrichtung bzw. zu der Empfangseinrichtung korrigiert wird. Zu diesem Zweck sind die Notfall-Kommunikationseinrichtung und die Empfangseinrichtung vorteilhaft dazu ausgebildet, eine Eigenortung, beispielsweise mittels GPS, durchzuführen, so dass aus der eigenen Position und der bekannten Position des Zeitzeichensenders die jeweilige Entfernung zum Zeitzeichensender und daraus die jeweilige Laufzeit ermittelt werden kann. Eine RTT Messung (Round-Trip-Time) vom Sender zum Empfänger und zurück zum Sender könnte auch genutzt werden, wodurch eine Zeitsynchronisation nicht notwendig wäre.

Da das Notfall-Signal insbesondere dazu dient, dem Nutzer der Empfangseinrichtung ein Navigieren zu der Notfall-Kommunikationseinrichtung zu ermöglichen, ist die Empfangseinrichtung vorzugsweise ebenfalls als bewegliche Kommunikationseinrichtung ausgebildet, wobei diese in Abhängigkeit der ermittelten relativen Ortsinformation Navigationsinformationen erzeugt und ausgibt, die es einem Nutzer der Empfangseinrichtung ermöglichen, zu der Notfall-Kommunikationseinrichtung zu navigieren. Beispielsweise kann auf einem Display der Empfangseinrichtung ein Pfeil angezeigt werden, welcher die Richtung zur Notfall-Kommunikationseinrichtung angibt, sowie eine Information, welche die geschätzte Entfernung zur Notfall-Kommunikationseinrichtung wiedergibt. Um die Richtung korrekt anzeigen zu können, umfasst die Empfangseinrichtung vorzugsweise einen Sensor zur Bestimmung der Orientierung der Empfangseinrichtung.

Sofern die Empfangseinrichtung dazu ausgebildet ist, eine Eigenortung durchzuführen, beispielsweise unter Verwendung eines GPS-Empfängers, kann die Empfangseinrichtung mittels der eigenen Position und der relativen Ortsinformation der beweglichen Notfall-Kommunikationseinrichtung relativ zur Empfangseinrichtung eine Ortung der Notfall-Kommunikationseinrichtung durchführen.

Es kann auch vorteilhaft vorgesehen sein, dass eine Funkpeilung durch wenigstens zwei Empfangseinrichtungen durchgeführt wird, wodurch eine Triangulation ermöglicht wird, mittels der durch jede der Empfangseinrichtungen eine Bestimmung der Richtung und Entfernung der jeweiligen Empfangseinrichtung zur Notfall-Kommunikationseinrichtung durchgeführt werden kann. Zu diesem Zweck ist jede der Empfangseinrichtungen vorzugsweise dazu ausgebildet, eine Eigenortung durchzuführen und mit den jeweils anderen Empfangseinrichtungen zu kommunizieren, um Messergebnisse auszutauschen.

Wird vorausgesetzt, dass die Notfall-Kommunikationseinrichtung im Wesentlichen unbewegt ist, kann eine Triangulation auch vorteilhaft mittels einer einzigen Empfangseinrichtung durchgeführt werden, indem von dieser zum Durchführen der Funkpeilung zu unterschiedlichen Zeitpunkten und an unterschiedlichen Orten wenigstens zwei Funkpeilungsmessungen durchgeführt werden. Zu diesem Zweck kann vorteilhaft vorgesehen sein, dass dem Nutzer der Empfangseinrichtung auf einem Bildschirm der Empfangseinrichtung Anweisungen angezeigt werden, um zu einem relativ zum ersten Messort geeigneten weiteren Messort zu gelangen, wobei der weitere Messort insbesondere dann als geeignet anzusehen ist, wenn sich bei dessen Wahl wenigstens zwei kreuzende Standlinien zur Positionsbestimmung ergeben. Beispielsweise kann dem Nutzer eine Bewegungsrichtung angezeigt werden, welche im Wesentlichen senkrecht zu der Richtung verläuft, welche zuletzt als Richtung relativ zur Notfall-Kommunikationseinrichtung ermittelt wurde.

In einer besonders vorteilhaften Ausführungsform ist die Notfall-Kommunikationseinrichtung dazu ausgebildet, eine Eigenortung, beispielsweise mittels eines GPS-Empfängers, durchzuführen. In dieser Ausführungsform sieht das Verfahren vorteilhaft vor, dass durch die Notfall-Kommunikationseinrichtung eine absolute Ortsinformation der Position der Notfall-Kommunikationseinrichtung ermittelt und diese absolute Ortsinformation mittels des Notfall-Signals zur Empfangseinrichtung übertragen wird.

Wie bereits oben beschrieben, kann auch die Empfangseinrichtung vorteilhaft dazu ausgebildet sein, eine Eigenortung, beispielsweise mittels eines GPS-Empfängers, durchzuführen, um eine absolute Ortsinformation der eigenen Position zu ermitteln. In Abhängigkeit der eigenen absoluten Ortsinformation und der mit dem Notfall-Signal übertragenen absoluten Ortsinformation der Notfall-Kommunikationseinrichtung kann die Empfangseinrichtung vorteilhaft die relative Ortsinformation der Notfall-Kommunikationseinrichtung zur Empfangseinrichtung, insbesondere die Richtung und die Entfernung, ermitteln, ohne eine Funkpeilung durchzuführen.

Zur Eigenortung wird durch die Notfall-Kommunikationseinrichtung oder die Empfangseinrichtung vorzugsweise eine Position in einem übergeordneten, insbesondere erdfesten Raumkoordinatensystem, beispielsweise basierend auf dem geodätischen Referenzsystem WGS84, ermittelt. In diesem Fall kann als Positions-Sensor jeweils insbesondere ein GPS-Empfänger eingesetzt werden. Es können aber auch andere PositionsSensoren zum Einsatz kommen. Denkbar wäre beispielsweise, dass in einem Gebäude Vorrichtungen vorgesehen sind, welche mit Sensoren zur Positionsbestimmung der Notfall-Kommunikationseinrichtung bzw. der Empfangseinrichtung zusammenwirken und ermöglichen, eine Position in einem dem Gebäude zugeordneten Raumkoordinatensystem zu ermitteln.

Besonders vorteilhaft kann die Empfangseinrichtung in Abhängigkeit der eigenen absoluten Ortsinformation und der mit dem Notfall-Signal übertragenen absoluten Ortsinformation der Notfall-Kommunikationseinrichtung eine mittels Funkpeilung ermittelte relative Ortsinformation anpassen, wobei eine Anpassung insbesondere mittels einer Ausgleichungsrechnung erfolgt. Auf diese Weise kann die Genauigkeit der ermittelten relativen Ortsinformationen verbessert werden. Die Genauigkeit der mittels GPS ermittelten absoluten Ortsinformationen liegt bei etwa 10 bis 100 m. Die Genauigkeit der mittels Funkpeilung ermittelten relativen Ortsinformationen hängt von der verwendeten Methode und den geographischen Gegebenheiten ab. Eine Ausgleichungsrechnung ist eine mathematische Optimierungsmethode, um unbekannte Parameter für eine Reihe von Messdaten zu schätzen, wobei typischerweise eine Überbestimmung vorliegt, die es erlaubt, eine bestmögliche Anpassung an ein Modell oder eine Funktion zu ermitteln, wobei beispielsweise die Methode der kleinsten Quadrate zur Anwendung kommt.

Für bestimmte Einsatzzwecke oder für den Fall, dass der Nutzer der Notfall-Kommunikationseinrichtung nicht in der Lage ist, den Notfallsender selbst zu aktivieren, ist vorteilhaft vorgesehen, dass die Aktivierung des Notfallsenders automatisch in Abhängigkeit einer von einem Sensor der beweglichen Kommunikationseinrichtung detektierten Umgebungsvariablen erfolgt.

Vorteilhaft ist ferner vorgesehen, dass die Empfangseinrichtung bei Empfang eines Notfall-Signals ein Bestätigungssignal zur Notfall-Kommunikationseinrichtung überträgt, dass das Notfall-Signal empfangen wurde.

Bei Empfang eines solchen Bestätigungssignals, welches eine Identifikation der jeweiligen Empfangseinrichtung umfassen kann, gibt die Notfall-Kommunikationseinrichtung vorzugsweise eine entsprechende Information an den Nutzer aus, dass und gegebenenfalls von wem das Notfall-Signal empfangen wurde. Das Bestätigungssignal kann vorteilhaft auch für eine von der Notfall-Kommunikationseinrichtung durchgeführte RTT-Messung genutzt werden, wobei vorzugsweise das Ergebnis der RTT-Messung, verknüpft mit der Identifikation der jeweiligen Empfangseinrichtung, in einem nachfolgenden Notfall-Signal zu der jeweiligen Empfangseinrichtung übertragen wird. Alternativ könnte eine RTT-Messung auch durch die Empfangseinrichtung auf Basis eines geeigneten Signalaustausches durchgeführt werden.

Der Notfallsender der Notfall-Kommunikationseinrichtung arbeitet unabhängig von dem Kommunikationsnetzwerk. Es kann jedoch vorteilhaft vorgesehen sein, dass zusätzlich oder alternativ zu dem vom Notfall-Sender ausgesandten Notfall-Signal auch über das Kommunikations-Netzwerk eine Notfall-Nachricht zu einer Empfangseinrichtung übertragen wird. Dies kann vorzugsweise unter Ansprechen auf eine Aktivierung des Notfallsenders oder unter Ansprechen darauf, dass nach einer vorgegebenen Zeitdauer kein Bestätigungssignal einer Empfangseinrichtung empfangen wurde, erfolgen.

Vorteilhaft umfasst das Notfall-Signal und/oder die Notfall-Nachricht eine Identifikationsinformation, welche die Notfall-Kommunikationseinrichtung eindeutig identifiziert, wobei dadurch vorteilhaft ermöglicht wird, dass die Empfangseinrichtung unter Verwendung der Identifikationsinformation eine Kommunikationsverbindung zu der Notfall-Kommunikationseinrichtung aufbaut, insbesondere über das Kommunikationsnetzwerk. Zu diesem Zweck kann die Identifikationsinformation eine Rufnummer der Notfall-Kommunikationseinrichtung umfassen.

Beispielsweise zur Abstimmung von Rettungsmaßnahmen kann vorteilhaft vorgesehen sein, dass eine Konferenzschaltung zwischen der Notfall-Kommunikationseinrichtung und weiteren Kommunikationsteilnehmern aufgebaut wird. Zu diesem Zweck ist vorteilhaft vorgesehen, dass das Notfall-Signal und/oder die Notfall-Nachricht eine Identifikationsinformation wenigstens zweier Kommunikationsteilnehmer umfasst, wobei die Empfangseinrichtung eine Kommunikation zwischen der Notfall-Kommunikationseinrichtung und den wenigstens zwei Kommunikationsteilnehmern initiiert, wobei die Empfangseinrichtung kann dabei selbst einer der Kommunikationsteilnehmer sein.

Eine weitere vorteilhafte Ausführungsform sieht vor, dass die Empfangseinrichtung von unterschiedlichen Notfall-Kommunikationseinrichtungen Notfall-Signale empfängt, wobei jedes Notfall-Signal eine Identifikationsinformation umfasst, welche die Notfall-Kommunikationseinrichtung eindeutig identifiziert, die das jeweilige Notfall-Signal gesendet hat, die Empfangseinrichtung in Abhängigkeit der empfangenen Notfall-Signale wenigstens einen Gefahrenbereich ermittelt, die Empfangseinrichtung Navigationsinformationen für wenigstens eine Notfall-Kommunikationseinrichtung erzeugt, die es einem Nutzer der Notfall-Kommunikationseinrichtung ermöglichen, aus dem ermittelten Gefahrenbereich zu navigieren, und die Empfangseinrichtung zu der wenigstens einen Notfall-Kommunikationseinrichtung unter Verwendung der jeweiligen Identifikationsinformation eine Kommunikationsverbindung aufbaut und die erzeugten Navigationsinformationen überträgt.

Eine erfindungsgemäße bewegliche Notfall-Kommunikationseinrichtung ist zur Kommunikation über ein Kommunikationsnetzwerk ausgebildet und umfasst zusätzlich einen Notfall-Sender zum Aussenden eines Notfall-Signals unabhängig von dem Kommunikationsnetzwerk. Ferner umfasst die Notfall-Kommunikationseinrichtung einen Mikroprozessor und einen Programm-Speicher mit einem darin gespeicherten Programm, welches insbesondere dazu ausgebildet ist, die durch die Notfall-Kommunikationseinrichtung auszuführenden Verfahrensschritte eines oben beschriebenen Verfahrens auszuführen, wenn es durch den Mikroprozessor ausgeführt wird.

Eine erfindungsgemäße Empfangseinrichtung umfasst einen Empfänger zum Empfangen eines von einer oben beschriebenen Notfall-Kommunikationseinrichtung ausgesandten Notfall-Signals, wobei die Empfangseinrichtung dazu ausgebildet ist, in Abhängigkeit eines empfangenen Notfall-Signals eine relative Ortsinformation der Notfall-Kommunikationseinrichtung zur Empfangseinrichtung zu ermitteln. Ferner umfasst die Empfangseinrichtung einen Mikroprozessor und einen Programm-Speicher mit einem darin gespeicherten Programm, welches insbesondere dazu ausgebildet ist, die durch die Empfangseinrichtung auszuführenden Verfahrensschritte eines oben beschriebenen Verfahrens auszuführen, wenn es durch den Mikroprozessor ausgeführt wird.

In einer besonders vorteilhaften Ausführungsform ist eine bewegliche Kommunikationseinrichtung vorgesehen, welche derart ausgebildet ist, dass sie wahlweise als erfindungsgemäße bewegliche Notfall-Kommunikationseinrichtung oder als erfindungsgemäße Empfangseinrichtung einsetzbar ist.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung einer bevorzugten Ausführungsform einer erfindungsgemäßen beweglichen Notfall-Kommunikationseinrichtung,
- Fig. 2:: eine schematische Darstellung einer bevorzugten Ausführungsform einer erfindungsgemäßen beweglichen Empfangseinrichtung,
- Fig. 3:: eine schematische Darstellung einer bevorzugten Ausführungsform einer als Empfangseinrichtung und als Notfall-Kommunikationseinrichtung ausgebildeten Kommunikationseinrichtung,
- Fig. 4:: schematisch ein bevorzugtes Ausführungsbeispiel für das Bestimmen der relativen Ortsinformationen der Notfall-Kommunikationseinrichtung durch die Empfangseinrichtung, und
- Fig. 5:: schematisch ein weiteres bevorzugtes Ausführungsbeispiel für das Bestimmen der relativen Ortsinformationen der Notfall-Kommunikationseinrichtung mittels Peilmessungen an wenigstens zwei verschiedenen Positionen.

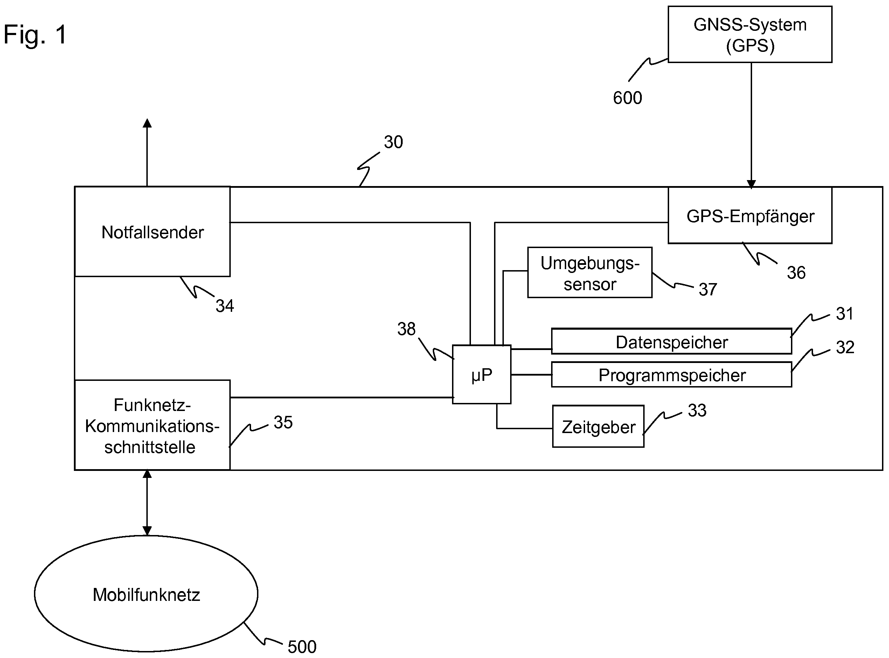

Fig. 1 zeigt als eine beispielhafte bewegliche Notfall-Kommunikationseinrichtung 30 ein Mobilfunktelefon, insbesondere ein Smartphone. Das Smartphone 30 kann zur Kommunikation in einem drahtlosen Kommunikationsnetz 500, insbesondere einem Mobilfunknetz, eingesetzt werden. Zu diesem Zweck weist das Smartphone 30 eine Funknetz-Kommunikationsschnittstelle 35 auf, über die es über das Funknetz 500 mit anderen, in Fig. 1 nicht dargestellten Kommunikationseinrichtungen kommunizieren kann.

Zusätzlich umfasst das Smartphone 30 einen Notfallsender 34 zum Aussenden eines Notfall-Signals unabhängig von dem Kommunikationsnetz 500, welches von entsprechend ausgerüsteten Empfangseinrichtungen in der näheren Umgebung des Smartphones 30 empfangen werden kann.

Weiterhin weist das Smartphone 30 einen als programmierbare Steuereinrichtung ausgebildeten Mikroprozessor 38 auf. Der Mikroprozessor 38 ist dazu ausgebildet, das Smartphone 30 zu steuern, wobei der Mikroprozessor 38 zu diesem Zweck ein in dem Programmspeicher 32 gespeichertes Programm ausführt.

Das Smartphone 30 ist dazu ausgebildet, unter Ansprechen auf eine Notfall-Aktivierung ein Notfall-Signal mittels des Notfallsenders 34 auszusenden. Die Notfall-Aktivierung kann durch den Nutzer des Smartphones 30 unter Verwendung von in Fig. 1 nicht dargestellten Eingabemitteln erfolgen oder auch automatisch in Abhängigkeit vorgegebener Parameter. Denkbar wäre zum Beispiel, dass die Notfall-Aktivierung nach Ablauf einer vorgegebenen Zeitdauer automatisch erfolgt. In der in Fig. 1 dargestellten Ausführungsform umfasst das Smartphone 30 ferner einen oder mehrere Umgebungssensoren 37, beispielsweise zur Temperatur- oder Rauchüberwachung. Besonders vorteilhaft kann die Notfall-Aktivierung automatisch in Abhängigkeit der von diesen Umgebungssensoren 37 gemessenen Umgebungsvariablen erfolgen.

Das Notfall-Signal ist vorzugsweise ein Signal mit einer vorgegebenen reservierten Sendefrequenz, welches mit einer vorgegebenen Signalstärke als Broadcast-Signal im Wesentlichen in alle Raumrichtungen ausgestrahlt wird. Vorteilhaft ist das Notfall-Signal ein moduliertes Signal mit darin enthalten Informationen, wobei das Signal auf der Empfängerseite demoduliert werden kann, um die enthaltenen Informationen zu empfangen. Das Notfall-Signal enthält vorzugsweise eine Identifikationsinformation, welche die Notfall-Kommunikationseinrichtung eindeutig identifiziert und vorzugsweise den Aufbau einer Kommunikationsverbindung zu der Notfall-Kommunikationseinrichtung ermöglicht. Beispielsweise kann die Identifikationsinformation die Mobilfunknummer des Smartphones 30 sein. Da das Notfall-Signal somit vorteilhaft zur Übertragung von Daten einsetzbar ist, bildet das Notfall-Signal insbesondere eine Notfall-Nachricht.

In der in Fig. 1 dargestellten Ausführungsform umfasst das Smartphone 30 ferner Messsensoren 36 zur Bestimmung seiner eigenen Position, welche beispielsweise zur Kommunikation mit einer außerhalb des Smartphones 30 angeordneten Einrichtung ausgebildet sind. Zum Ermitteln der Position des Smartphones 30 können mehrere Sensoren, auch unterschiedliche Arten von Sensoren eingesetzt werden. Vorzugsweise ist jeder der eingesetzten Messsensoren dazu ausgebildet, zu einer ermittelten Positionsinformation deren Genauigkeit zu ermitteln. Bei Einsatz mehrerer Sensoren kann beispielsweise ein Mittelwert gebildet werden oder es können die Informationen des Sensors mit der jeweils höheren Genauigkeit verwendet werden. Ferner können je nach Einsatzumgebung und Einsatzzweck unterschiedliche Arten von Messsensoren zur Positionsbestimmung eingesetzt werden. Im vorliegenden Ausführungsbeispiel umfassen die Messsensoren 36 zur Positionsbestimmung des Smartphones 30 einen GNSS (Global Navigation Satelliten System)-fähigen Empfänger, welcher beispielsweise als herkömmlicher GPS-Empfänger ausgebildet ist. Der GPS-Empfänger ist zum Empfangen und Auswerten von Positionssignalen eines Satellitensystems 600 ausgebildet. Aus den Positionssignalen wird eine Positionsinformation gewonnen, die die Positionskoordinaten des Smartphones 30, die Genauigkeit dieser Positionskoordinaten und vorzugsweise noch einen Gültigkeitszeitpunkt enthält. Die Genauigkeit liegt in der Regel als Standardabweichung vor. Insbesondere werden mittels der Sensoren 36 zur Positionsbestimmung des Smartphones 30 Daten bezüglich eines übergeordneten Raumkoordinatensystems erzeugt, wobei im dargestellten Ausführungsbeispiel die Definition des übergeordneten Raumkoordinatensystems in einem Daten-Speicher 31 gespeichert ist.

Vorteilhaft wird eine absolute Ortsinformation im Notfallsignal übertragen, welche die mittels der Sensoren 36 ermittelte Position der Notfall-Kommunikationseinrichtung, sowie vorzugsweise deren Genauigkeit und/oder zugehörigen Gültigkeitszeitpunkt umfasst.

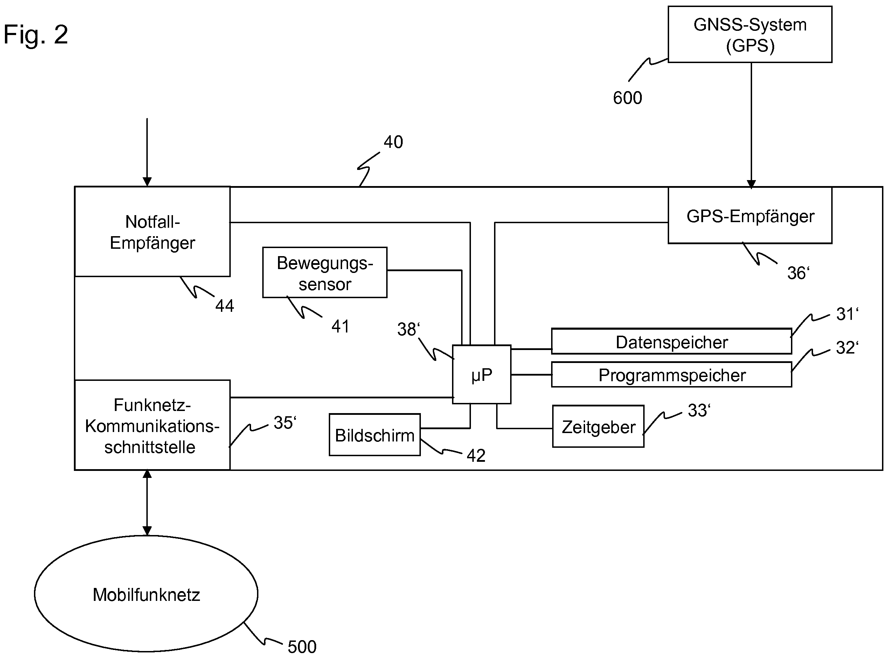

In Fig. 2 ist schematisch der Aufbau einer zum Empfangen des Notfall-Signals ausgebildeten Empfangseinrichtung 40 dargestellt. Um mittels der Empfangseinrichtung 40 zur Position der Notfall-Kommunikationseinrichtung 30 navigieren zu können, ist die Empfangseinrichtung 40 vorteilhaft ebenfalls als bewegliche Kommunikationseinrichtung, beispielsweise als Mobilfunktelefon, insbesondere als Smartphone, ausgebildet. Das als Empfangseinrichtung ausgebildete Smartphone 40 ist ähnlich aufgebaut wie das in Fig. 1 dargestellte Smartphone 30, wobei das Smartphone 40 statt des Notfallsenders 34 einen Notfallempfänger 44 zum Empfangen des Notfall-Signals aufweist. Komponenten der Empfangseinrichtung 40, welche identisch oder ähnlich zu entsprechenden Komponenten der Notfall-Kommunikationseinrichtung 30 ausgebildet sind, sind mit identischen Bezugszeichen mit zusätzlichem Apostroph gekennzeichnet. Das Smartphone 40 ist dazu ausgebildet, in Abhängigkeit des empfangenen Notfall-Signals relative Ortsinformationen des Smartphones 30 relativ zum Smartphone 40 zu ermitteln, wobei die relativen Ortsinformationen insbesondere Richtung und Entfernung zum Smartphone 30 umfassen. Diese relativen Ortsinformationen werden dem Nutzer des Smartphones 40 auf dem Bildschirm 42 in geeigneter Weise angezeigt, um eine Navigation zum Smartphone 30 zu ermöglichen.

Die Entfernung kann im einfachsten Fall in Abhängigkeit der Signalstärke des empfangenen Notfall-Signals bestimmt werden. Alternativ kann zum Bestimmen der Entfernung auch die Laufzeit des Notfall-Signals vom Smartphone 30 zum Smartphone 40 bestimmt werden, wobei die Smartphones 30 und 40 zu diesem Zweck Zeitgeber 33 bzw. 33' aufweisen, wobei zum Durchführen einer Laufzeitmessung die Smartphones 30 und 40 dazu ausgebildet sind, ihren jeweiligen Zeitgeber 33 bzw. 33' mit dem gleichen externen Zeitnormal zu synchronisieren. Die Richtung kann vorteilhaft mittels Funkpeilung bestimmt werden, wobei zu diesem Zweck der Notfallempfänger 44 vorteilhaft als Peilempfänger ausgebildet ist. Ferner kann vorteilhaft eine im Notfall-Signal enthaltene absolute Ortsinformation des Smartphones 30 zur Entfernungs- und/oder Richtungsbestimmung ausgewertet werden.

Um die Richtung zum Smartphone 30 korrekt anzeigen zu können, umfasst das Smartphone 40 Messsensoren 41 zur Bestimmung der Orientierung des Smartphones 40. Im dargestellten Ausführungsbeispiel sind die Messsensoren 41 als Bewegungssensoren ausgebildet, welche beispielsweise Inertialsensoren auf Basis von mikroelektromechanischen Systemen (MEMS) oder Faserkreiseln umfassen. Es können aber auch andere geeignete Beschleunigungs- oder Drehsensoren eingesetzt werden.

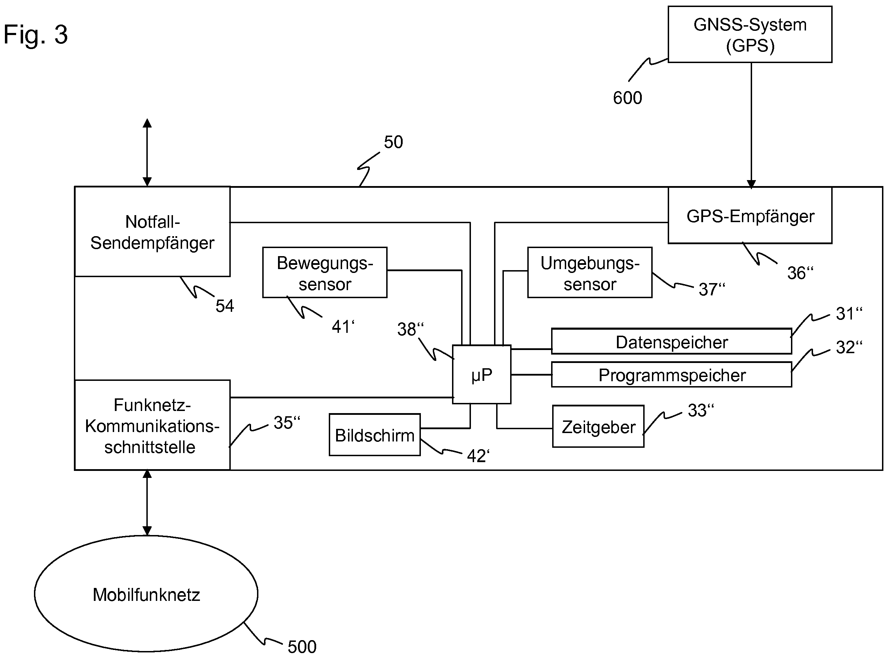

In Fig. 3 ist eine bewegliche Kommunikationseinrichtung 50 dargestellt, welche sowohl die Funktionalität der in Fig. 1 dargestellten Notfall-Kommunikationseinrichtung 30 als auch die Funktionalität der in Fig. 2 dargestellten Empfangseinrichtung 40 umfasst. Die beispielsweise ebenfalls als Smartphone ausgebildete Kommunikationseinrichtung 50 umfasst somit die Komponenten beider Smartphones 30 und 40, wobei das Smartphone 50 statt des Notfallsenders 34 des Smartphones 30 und des Notfallempfängers 44 des Smartphones 40 einen Notfall-Sendeempfänger 54 umfasst, der die Funktionalitäten des Notfallsenders 34 und des Notfallempfängers 44 vereint. Komponenten der Kommunikationseinrichtung 50, welche identisch oder ähnlich zu entsprechenden Komponenten der Notfall-Kommunikationseinrichtung 30 ausgebildet sind, sind mit identischen Bezugszeichen mit doppeltem Apostroph gekennzeichnet. Solche Komponenten der Kommunikationseinrichtung 50, welche identisch oder ähnlich zu entsprechenden Komponenten der Empfangseinrichtung 40 ausgebildet sind, sind mit identischen Bezugszeichen mit Apostroph gekennzeichnet.

Das in Fig. 3 dargestellte Smartphone 50 ist somit vorteilhaft zum Senden und/oder zum Empfangen eines Notfall-Signals ausgebildet. Alle bezüglich der Notfall-Kommunikationseinrichtung 30 und der Empfangseinrichtung 40 beschriebenen Ausführungsbeispiele lassen sich somit auch jeweils mit einer in Fig. 3 dargestellten Kommunikationseinrichtung 50 ausführen.

Ein Kerngedanke der Erfindung kann darin gesehen werden, dass der Notfallsender 34 bzw. 54 der beweglichen Notfall-Kommunikationseinrichtung 30 bzw. 50 nach dem Auslösen des Notfalls permanent Informationen aussendet, die in seiner näheren Umgebung gesichert im Wesentlichen in Echtzeit empfangen werden können, und dass diese Informationen es dem Empfänger ermöglichen, den Sender zu identifizieren, zu orten und zu ihm zu navigieren, sowie gegebenenfalls zu ihm Kontakt aufzunehmen, wobei die Kontaktaufnahme durch einen direkten Signalaustausch mittels auf beiden Seiten vorhandenen Notfall-Sendeempfängern 54 oder durch den Aufbau einer Kommunikationsverbindung über das Kommunikationsnetz 500 erfolgen kann.

Die mobile Notfall-Kommunikationseinrichtung 30 kann vorzugsweise zu Ortungszwecken ihre Positionsinformation bestimmen und/oder ein Signal aussenden, das von der empfangenden Kommunikationseinrichtung zur Bestimmung der Ortungsrichtung genutzt werden kann, und/oder Signale aussenden und/oder empfangen, die die kürzeste Entfernung zur empfangenden Kommunikationseinrichtung bestimmen lassen. Diese ortungsrelevanten Informationen können von der Notfall-Kommunikationseinrichtung 30 per Broadcast an Kommunikationseinrichtungen der Umgebung gesendet werden. Zusätzlich zu den ortungsrelevanten Informationen können noch weitere Informationen per Broadcast gesendet werden, so zum Beispiel der Grund des Notfalls, die Mobilfunknummer der Notfall-Kommunikationseinrichtung 30, medizinische Daten des Nutzers der Notfall-Kommunikationseinrichtung 30, der aktuelle Zeitpunkt, der Zeitpunkt und die Positionsinformation der Erstauslösung des Notfalls, im Notfall zu kontaktierende Rufnummern und sonstige persönliche Daten des Nutzers der Notfall-Kommunikationseinrichtung 30. Als zusätzlich verbesserte Positionsinformation könnte die Notfall-Kommunikationseinrichtung 30 auch eine sogenannte Perlenkette mit geeigneten veralteten Positionsinformationen übertragen, damit die empfangende Kommunikationseinrichtung 40 hieraus unter Nutzung eines sogenannten und bekannten Map Matching Verfahrens eine Ortung durchführen kann.

Die Notfall-Kommunikationseinrichtung 50 könnte zudem zuerst versuchen, auf dem durch den Notfall-Sendeempfänger 54 genutzten Echtzeitsicheren Kommunikationsweg, d.h. ohne Einsatz des Kommunikationsnetzes 500, nur die Kommunikationseinrichtungen der näheren Umgebung zu erreichen und deren Rückmeldungen zu empfangen. Die durch den Notfall-Sendeempfänger 54 empfangenen Rückmeldungen können vorteilhaft die Information umfassen, dass die Notfallinformation vom Nutzer der das Notfall-Signal empfangenden Einrichtung erkannt wurde und/oder Hilfeleistung beabsichtigt ist. Die Notfall-Kommunikationseinrichtung 50 könnte danach oder zeitgleich versuchen, eine höhere Reichweite zu erzielen, um zusätzliche Helfer zu erreichen oder zusätzlichen Kommunikationseinrichtungen die Notfallinformation zukommen zu lassen, indem über das Kommunikationsnetz 500 eine Notfall-Nachricht versandt wird, beispielsweise als Textnachricht unter Verwendung des Kurznachrichtendienstes SMS (Short Messaging Service). Die Notfallnachricht kann vorzugsweise an einen oder mehrere im Datenspeicher 31 hinterlegte Empfänger versandt werden.

Auch die automatische Aussendung eines Notfall-Signals, welches keine Aufforderung zur Hilfeleistung darstellt, kann für den Empfänger des Notfall-Signals von Nutzen sein, zum Beispiel, wenn die Umgebungssensoren 37 einer Notfall-Kommunikationseinrichtung 30 eine sehr hohe Temperatur oder Rauchintensität im Vergleich zu vorgegebenen Standardwerten messen, was zum Beispiel auf ein Feuer hinweisen kann. Auf diese Weise kann der Hinweis auf ein mögliches Feuer nicht nur dem Nutzer der Notfall-Kommunikationseinrichtung 30 angezeigt werden, sondern auch anderen Personen in der Umgebung, die über eine entsprechende Empfangseinrichtung 40 verfügen, selbst wenn der Nutzer der sendenden Notfall-Kommunikationseinrichtung nicht in der Nähe derselben ist, diese aber in Betrieb ist.

Ganz allgemein können auch beliebige Informationsinhalte durch die Notfall-Nachricht übermittelt werden und gegebenenfalls auch zu Aktionen beim Empfänger führen. Zu jedem Informationsinhalt und/oder Informationstyp können vorteilhaft unterschiedliche Auslöser im Datenspeicher 31 der Notfall-Kommunikationseinrichtung 30 hinterlegt sein und unterschiedliche Sensoren der Notfall-Kommunikationseinrichtung 30 und deren Messwerte benötigt werden.

Ein wesentlicher Aspekt der Erfindung besteht darin, ein Auffinden der Notfall-Kommunikationseinrichtung 30 zu ermöglichen, nachdem eine empfangende mobile Kommunikationseinrichtung 40 der näheren Umgebung die Notfall-Nachricht über den störungs-unanfälligeren Kommunikationsweg mit beschränkter Reichweite, bzw. den störungs-unanfälligsten mehrerer implementierter Alternativen, also den Weg unabhängig von Kommunikationsnetzen mit Infrastruktur, erhalten hat.

Die Navigation von der Empfangseinrichtung 40 zur Notfall-Kommunikationseinrichtung 30 kann in Abhängigkeit der jeweiligen absoluten Positionen erfolgen, wobei zu diesem Zweck das Notfall-Signal die absolute Ortsinformation der Notfall-Kommunikationseinrichtung 30 enthält und die Empfangseinrichtung 40 dazu ausgebildet ist, die eigene absolute Position zu ermitteln. Die Qualität der Navigation wird dabei von den absoluten Positionen und ihren vorliegenden Genauigkeiten beeinflusst, da entweder die genutzte Ortungsinformation wie Abstand und Richtung als Funktion der Genauigkeit der zwei Positionen umso schlechter wird je schlechter die Positionsinformationen sind, oder eine Navigation mittels Wegepunkten einer Route, berechnet durch einen Router, basierend auf navigationsfähigem Kartenmaterial, ebenfalls umso schlechter wird je schlechter die Informationen über den Startpunkt, d.h. die Position der Empfangseinrichtung 40, und den Zielpunkt, d.h. die Position Notfall-Kommunikationseinrichtung 30 , sind und je schlechter das Kartenmaterial ist.

Die Navigation über Wegepunkte hat somit erhebliche Risiken insbesondere bei falscher Zuordnung des Zielpunktes zu einem Wegenetz einer Karte bei schlechter Positionsbestimmung der Notfall-Kommunikationseinrichtung 30, was auch nur an einer auch dauerhaft gestörten Umgebung der Empfangseinrichtung 40 liegen kann. Die Navigation über Wegepunkte hat auch den Nachteil, dass Fehler des Routers und/oder des Kartenmaterials sich fatal auswirken können und dieses auch bei extremer Nähe des Zieles.

Um die Nachteile und Risiken einer Navigation über eine Wegepunkte-basierte Route zu vermeiden und/oder zu mindern, wird vorzugsweise ein Navigationsverfahren mittels einfacher, insbesondere relativer Ortungsinformationen wie Strecke und relativer Richtung zum Ziel genutzt, wobei die Bestimmung dieser relativen Ortungsinformation nicht davon abhängig ist, dass die Notfall-Kommunikationseinrichtung 30 und die Empfangseinrichtung 40 dazu ausgebildet sind, die eigene absolute Position zu bestimmen und somit auch nicht von den mit absoluten Größen, wie zum Beispiel einer GPS-Position im WGS84 Koordinatensystem, zusammenhängenden Genauigkeiten. Auf diese Weise hängt die Qualität der Navigation vorteilhaft nur von eher relativen Größen zwischen Notfall-Kommunikationseinrichtung 30 und Empfangseinrichtung 40 und der Bestimmungsgenauigkeit und den Bestimmungsverfahren dieser eher relativen Größen ab. Diese eher relativen Größen sind insbesondere der räumliche Abstand zwischen Notfall-Kommunikationseinrichtung 30 und der Empfangseinrichtung 40 und die Angabe der Richtung in der Empfangseinrichtung 40 zur sendenden Notfall-Kommunikationseinrichtung 30. Prinzipiell gibt es verschiedene bekannte Verfahren wie die Strecke und diese Richtung ermittelt werden können. Auch kann diese 3-dimensionale Raumstrecke und die 3-dimensionale Raumrichtung noch durch bekannte Sensoren und Verfahren weiter differenziert werden in ihre horizontalen und vertikalen Komponenten, wobei auch die zugeordneten Genauigkeiten in bekannter Weise berechnet werden können. Zur Bestimmung dieser differenzierten 3-dimensionalen Ortungsinformationen, d.h. Streckenanteile und Richtungsanteile und deren zugeordnete Genauigkeiten, können an sich bekannte Verfahren eingesetzt werden. Beispielsweise kann eine Bestimmung durch die Raumstreckenmessung aus Signalstärken und deren Aufspaltung in eine horizontale und vertikale Komponente durch zusätzliche Höheninformationen und zum Beispiel durch eine Richtungsmessung basierend auf der Peilung der Notfall-Kommunikationseinrichtung 30 durch die Empfangseinrichtung 40 mittels des Peilempfängers 44. Zur Vereinfachung wird im Folgenden nur der 2-dimensionale Fall in einer Horizontalebene betrachtet, da der 3-dimensionale Fall eindeutig aus zwei 2-dimensionalen Fällen folgt.

Die Nutzung von relativen Größen hat insbesondere gegenüber nicht oder oft nur ungenau oder unsicher zu bestimmenden absoluten Positionen der beteiligten Kommunikationseinrichtungen einen Vorteil, wobei diese Situation typischerweise oft in Gebäuden vorliegt, d.h. bei der Indoor-Anwendung, da innerhalb von Gebäuden beispielsweise ein GPS-Empfang nur in sehr begrenztem Umfang möglich ist. Es werden aber Notrufe per Sprachanruf bei entsprechenden Notrufnummern überwiegend Indoor ausgeführt.

Für die Nutzung dieser relativen Ortungsinformationen kann es wichtig sein, wann diese bestimmt bzw. berechnet werden können, da zum Beispiel eine Richtungspeilung bei manchen Methoden nur durch eine Bewegung entweder des Empfängers oder des Senders bestimmbar wird. Da davon ausgegangen wird, dass der Sender, d.h. die Notfall-Kommunikationseinrichtung 30, situativ bedingt gegebenenfalls dauerhaft nahezu unbewegt ist, muss je nach zu nutzender Bestimmungsmethode der Peilung der Empfänger, d.h. die Empfangseinrichtung 40, während der Bestimmung der relativen Ortsinformationen bewegt werden, beispielsweise um bei zwei unterschiedlichen Positionen der Empfangseinrichtung 40 eine Peilung der Position der Notfall-Kommunikationseinrichtung 30 durchzuführen, um auf diese Weise zwei sich kreuzende Standlinien zur Positionsbestimmung zu erhalten. Zu diesem Zweck kann dem Nutzer der Empfangseinrichtung 40 vorteilhaft mittels einer geeigneten Ausgabe auf dem Bildschirm 42 mitgeteilt werden, dass und in welche Richtung er sich zu einer geänderten Position bewegen soll.

Vorteilhaft können auch die Methoden der Wegepunktebasierten Navigation und die der Ortungs-basierten Navigation gemeinsam genutzt werden und sich gegenseitig unterstützen.

Die Ortungs-basierte Navigation mittels relativer Größen kann auch nur durch die zusätzliche Nutzung der absoluten Positionsinformationen verbessert werden, welche von der Notfall-Kommunikationseinrichtung 30 und der Empfangseinrichtung 40 jeweils für ein gemeinsames übergeordnetes Koordinatensystem absolut bestimmt werden, ohne dass ein Router und eine wegepunkte-basierte Navigation genutzt wird. Zu diesem Zweck ermittelt die Empfangseinrichtung 40 eine absolute Ortsinformation der eigenen Position und passt die, insbesondere mittels Funkpeilung ermittelten, relativen Ortsinformationen in Abhängigkeit der eigenen absoluten Ortsinformation und der mit dem Notfall-Signal übertragenen absoluten Ortsinformation der Notfall-Kommunikationseinrichtung 30 an, wobei die Anpassung insbesondere mittels einer Ausgleichungsrechung erfolgt. Es wird somit aus den beiden Ortsinformationstypen, den absoluten und den relativen Ortsinformationen und ihren Genauigkeiten die statistisch plausibelste Ortung mit einer verbesserten Richtung und einer verbesserten Streckenlänge berechnet.

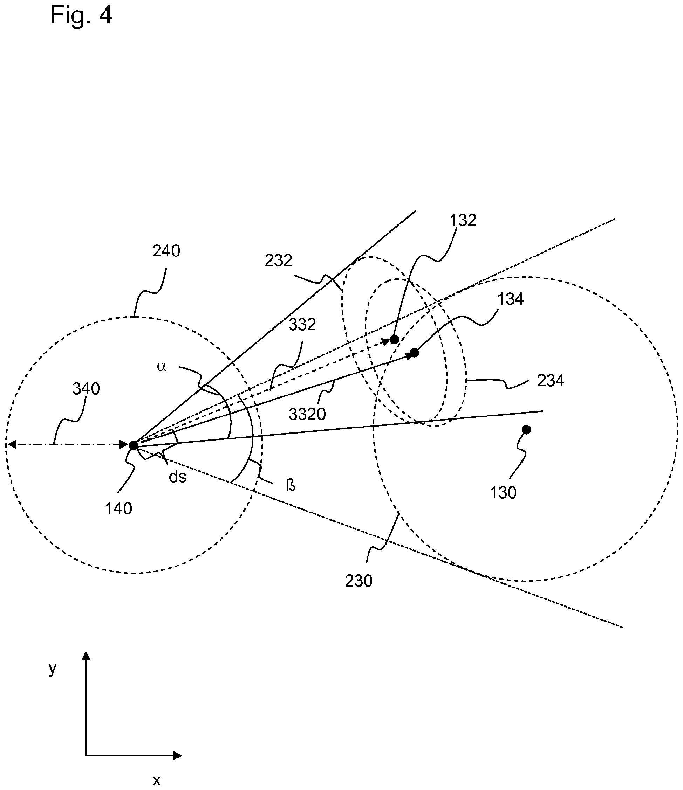

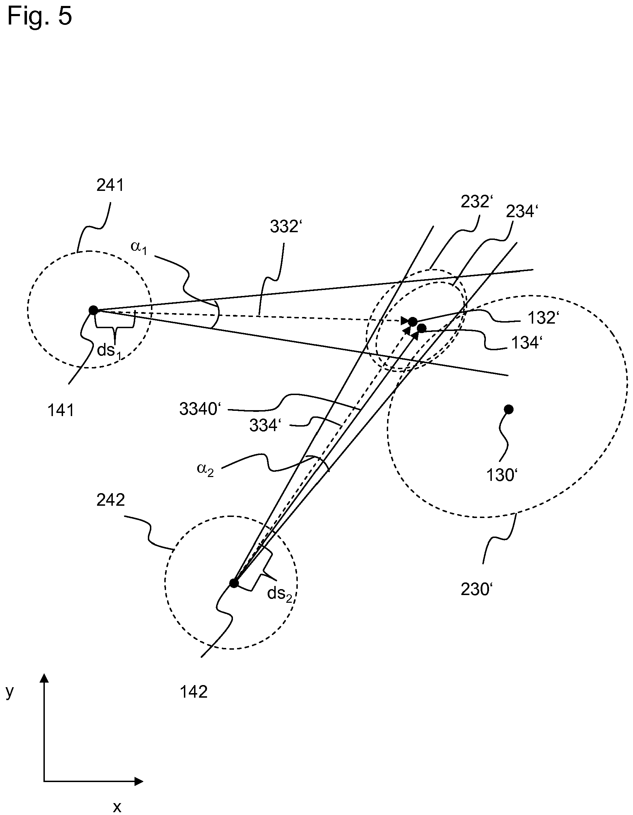

Dies ist beispielhaft in Fig. 4 dargestellt. Die Notfall-Kommunikationseinrichtung 30 bestimmt die eigene absolute Position 130 mittels des GPS-Empfängers 36, wobei die Genauigkeit durch die gestrichelte Ellipse 230 angegeben ist. Die in den Figuren 4 und 5 jeweils als gestrichelte Ellipsen angegebenen Genauigkeiten geben im jeweils dargestellten Beispiel 1-sigma-Werte basierend auf einer Gaußverteilung des Fehlers bei der Positionsbestimmung, d.h. dass die tatsächliche Position zu ca. 68 % innerhalb des durch die gestrichelte Linie jeweils definierten Bereiches liegt. Die Notfall-Kommunikationseinrichtung 30 sendet ein Notfall-Signal, welches Informationen zu der Position 130 und deren Genauigkeit 230 umfasst, als Broadcast-Signal aus. Die Empfangseinrichtung 40 empfängt das Notfall-Signal und die darin enthaltenen Informationen und bestimmt mittels des GPS-Empfängers 36' die eigene Position 140 und deren Genauigkeit 240. Der als Entfernung 340 angegebene 1-sigma-Wert in x-Richtung beträgt im dargestellten Beispiel ca. 50 m.

Beispielsweise mittels einer Funkpeilung und einer Messung der Signalstärke des Notfall-Signals ermittelt die Empfangseinrichtung 40 eine Richtung und eine Entfernung zu der Notfall-Kommunikationseinrichtung 30, die durch den Richtungspfeil 332 wiedergegeben werden, wobei die Pfeillänge die Entfernung wiedergibt und ds der 1-sigma-Wert der Entfernungsmessung sei. Daraus ergibt sich mit der Position 140 für die Notfall-Kommunikationseinrichtung 30 die relative Position 132 relativ zur Empfangseinrichtung 40 mit ihrer Position 140, wobei der sich aufgrund der Peilmessung ergebende Fehler durch die Fehlerellipse 232 angegeben ist. In Fig. 4 folgt die Fehlerellipse 232 aus den Peilungselementen Richtung und Strecke des Richtungspfeils 332 mit den 1-sigma Fehlern α/2 für die Richtung und ds für die Strecke. Der durch die Fehlerellipse 240 angegebene Standpunktfehler der Empfangseinrichtung geht hierbei nicht in die Berechnung der Fehlerellipse 232 ein, da nur die durch den Richtungspfeil 332 angegebene relative Richtung und der relative Abstand und deren Fehler zur Auffindung der Notfall-Kommunikationseinrichtung 30 aus der Peilungs- und/oder Signalstärkemessung berechnet wurde. Werden zusätzlich zu dieser Peilungs- und/oder Signalstärkemessung noch die Positionen 140 und 130 und deren Positionsgenauigkeiten 240 und 230 zusammen mit der Peilungs- und/oder Signalstärkemessung im Schätzverfahren berücksichtigt, so folgt hieraus die verbesserte Peilung mit Richtung und Strecke des Richtungspfeils 3320 und die Position 134 und die Fehlerellipse 234, deren Werte in der Empfangseinrichtung 40 als relative Navigationsgrößen angezeigt werden können. Die damit auch verbesserte Peilungsgenauigkeit in der Richtungskomponente kann hieraus einfach geschätzt werden und ist in Fig. 4 nicht gesondert dargestellt. Auf die Streckenmessung 332 könnte bei dem Verfahren zur Berechnung der Position 134 und der Fehlerellipse 234 theoretisch auch verzichtet werden, wodurch die Berechnungsgenauigkeit der Ergebnisse dann aber in der Regel mit einem größeren Fehler behaftet wären. Ohne eine Peilungsmessung zur Bestimmung des Richtungspfeils 332 mit Richtung und Streckenlänge können die Peilungswerte auch nur aus den Positionen 140 und 130 und deren Genauigkeiten geschätzt werden. Im angenommenen zu optimistischen Fall, dass der Positionsfehler für Position 140 zu Null gesetzt wird, folgt anschaulich, dass der Richtungsfehler der Richtung von 140 zu 130 zu β/2 als 1-sigma-Wert folgen würde und somit bereits wesentlich größer als α/2 ist. Würde die Streckenmessung für den Richtungspfeil 332 nicht vorliegen, so könnten eine Position 134 und eine Fehlerellipse 234 trotzdem - zwar mit anderen numerischen Werten - noch berechnet werden, sofern die Positionen 130 und 140 und ihre Fehlerellipsen 230 und 240 in der Ausgleichung mit berücksichtigt werden. Liegen die Werte für 130, 140, 230 und 240 sowie die Streckenmessung für 232 nicht vor, so wird die Annäherung der Empfangseinrichtung 40 an die Notfall-Kommunikationseinrichtung 30 nur durch die Richtungsangabe des Richtungspfeils 332 erfolgen können, deren Richtungsfehler dann nur aus dem vorgegebenen Methodenfehler und Instrumentenfehler der Richtungspeilung abgeleitet ist. Angemerkt sei noch, dass die gemeinsame Ausgleichung der Richtung einer Peilungsmessung zusammen mit den absoluten Positionsbestimmungen nur dann möglich ist, wenn die Richtungsmessung der Peilung einen bekannten Bezug zum Koordinatensystem hat, in dem die absoluten Positionen bestimmt wurden.

Mittels einer Ausgleichungsrechnung unter Berücksichtigung der zur eigenen absoluten Position ermittelten Informationen und den mit dem Notfall-Signal empfangenen Informationen zu der absoluten Position der Notfall-Kommunikationseinrichtung 30 ermittelt die Empfangseinrichtung 40 verbesserte Werte für die Richtung und die Entfernung zu der Notfall-Kommunikationseinrichtung 30, welche durch den Richtungspfeil 3320 wiedergegeben werden, aus dem sich die korrigierte relative Position 134 für die Notfall-Kommunikationseinrichtung 30 ergibt mit einer entsprechend korrigierten Fehlerellipse 234. Die Berechnungsverfahren für diese korrigierten Größen inklusive der Fehlerfortpflanzung für diese Größen sind an sich bekannt und werden daher nicht im Detail beschrieben.

Die in Fig. 4 dargestellten Informationen werden vorteilhaft auf dem Bildschirm 42 der Empfangseinrichtung 40 dargestellt. Insbesondere werden die korrigierten Werte für die Entfernung und die Richtung zur Notfall-Kommunikationseinrichtung 30 angezeigt, vorzugsweise zusammen mit den Genauigkeiten dieser relativen Ortungsgrößen.

Um die anschließende Navigation zur Notfall-Kommunikationseinrichtung 30 zu verbessern, sendet die Notfall-Kommunikationseinrichtung 30 das Notfall-Signal vorzugsweise mehrmals, insbesondere in regelmäßigen Zeitabständen, wobei die Inhalte wie zum Beispiel die Informationen zu der absoluten Position der Notfall-Kommunikationseinrichtung 30 erneuert, d.h. aufdatiert, werden. Ferner führt die Empfangseinrichtung 40 ihre Berechnungen mit Erhalt einer neuen Notfallnachricht vorteilhaft erneut durch, wobei bei einer erneuten Ausgabe auf dem Bildschirm 42 vorteilhaft eine Mittelung bzw. Glättung mittels vorhandener Historiendaten durchgeführt werden kann, sofern die Bewegungen der Empfangseinrichtung 40 und der Notfall-Kommunikationseinrichtung 30 als untergeordnet klein erkannt werden. Ferner sei angemerkt, dass die Empfangseinrichtung 40 Navigationsanweisungen visuell auf dem Bildschirm 42 und/oder akustisch und/oder auf anderer geeignete Weise ausgeben kann.

Ferner kann auch die Notfall-Kommunikationseinrichtung 30 zusätzlich zu dem Notfall-Signal eine in der näheren Umgebung hörbare akustische Nachricht senden.

In Fig. 5 ist ein weiteres Beispiel für das Ermitteln der statistisch plausibelsten Ortung mit einer verbesserten Richtung und einer verbesserten Streckenlänge aus absoluten und relativen Ortsinformationen angegeben. Das in Fig. 5 dargestellte Beispiel ähnelt dem in Fig. 4 dargestellten, wobei bei dem in Fig. 5 dargestellten Beispiel eine Funkpeilung mittels Peilmessungen an wenigstens zwei unterschiedlichen Positionen 141 und 142 durchgeführt werden. Auf den Positionen 141 und 142 kann eine einzige Empfangseinrichtung 40 zu unterschiedlichen Zeitpunkten die Messungen und Berechnungen durchführen, sofern mit ausreichender Genauigkeit angenommen werden kann, dass die Position der Notfall-Kommunikationseinrichtung 30 sich nicht verändert hat. Mit der Bewegung von 141 zu 142 können dann die Messungen des Standpunktes 141 auf dem neuen späteren Standpunkt 142 im Schätzverfahren zusammen mit den Messungen des Standpunktes 142 und allen absoluten Positionsmessungen und deren Genauigkeiten genutzt werden. Anstatt einer bewegten Empfangseinrichtung 40 können aber auch zwei unterschiedliche Empfangseinrichtungen genutzt werden, die ihre Messdaten und die Empfangsdaten der Notfall-Kommunikationseinrichtung 30 miteinander austauschen können, damit sie in einem Schätzverfahren zum gleichen Zeitpunkt verwendet werden können. Bei zeitgleichen Messungen in den zwei Empfangseinrichtungen, jeweils auf den Positionen 141 und 142, kann sich die Notfall-Kommunikationseinrichtung 30 auch bewegen. Die sich ergebenden Standlinien 332' und 334' werden durch zufällige Winkelfehler um den Winkel α₁ bzw. α₂ aufgefächert, wobei α₁/2 bzw. α₂/2 die Standardabweichungen der normalverteilten Fehler seien. Aus dem Schnittpunkt der Standlinien 332' und 334' ergibt sich die Position 132' der Notfall-Kommunikationseinrichtung 30 mit der zugehörigen Fehlerellipse 232'. Hierbei können, soweit vorliegend, zur Genauigkeitssteigerung in der Ausgleichung auch die Streckenmessungen für 332' und 334' mit ihren Standardabweichungen ds1 und ds2 berücksichtigt werden. Wenn die Empfangseinrichtungen mit Notfall-Sendempfängern 54 ausgestattet sind, können diese für den Informationsaustausch eingesetzt werden, wobei die Signale dann vorzugsweise eine Kennung umfassen, um sie von Notfall-Signalen unterscheidbar zu machen. Es kann aber auch jeder andere geeignete Kommunikationskanal verwendet werden. Beispielsweise können auch Daten über das Kommunikationsnetz 500 ausgetauscht werden.

Mittels einer Ausgleichungsrechnung unter Berücksichtigung der zu den eigenen absoluten Positionen 141 und 142 ermittelten Informationen und den mit dem Notfall-Signal empfangenen Informationen zu der absoluten Position 130' der Notfall-Kommunikationseinrichtung 30, sowie den zugehörigen Genauigkeiten 241, 242 und 230' ermittelt die Empfangseinrichtung bzw. jede der Empfangseinrichtungen verbesserte Werte für die Richtung und die Entfernung zu der Notfall-Kommunikationseinrichtung 30. Das Ergebnis ist in Fig. 5 als korrigierte Position 134' mit der zugehörigen Fehlerellipse 234' dargestellt. Auch hier sei angemerkt, dass die gemeinsame Ausgleichung der Richtungen von Peilungsmessungen zusammen mit den absoluten Positionsbestimmungen nur dann möglich ist, wenn die Richtungsmessung der Peilung einen bekannten Bezug zum Koordinatensystem hat, in dem die absoluten Positionen bestimmt wurden. Analog zu den Anmerkungen zu dem in Fig. 4 dargestellten Ausführungsbeispiel können auch bei dem in Fig. 5 dargestellten Ausführungsbeispiel einzelne Messelemente fehlen, um eine Lösung für die Position und Genauigkeit der der Notfall-Kommunikationseinrichtung 30 oder relative Navigationshinweise zur 30 zu erhalten. Ist 142 der zeitlich spätere Standpunkt und werden alle Messungen durchgeführt und auch die absoluten Positionsbestimmungen berücksichtigt, so erhält man auf Punkt 142 die verbesserte Peilung 3340' zur verbesserten Position 134' der Notfall-Kommunikationseinrichtung 30.

Ein vorteilhafter Aspekt der Erfindung besteht darin, dass die Notfall-Kommunikationseinrichtung hierarchisch verschiedene Kommunikationsarten, Kommunikationswege und/oder Kommunikationstechnologien nutzt, wobei diese zum Erreichen unterschiedlicher Teilzwecke genutzt werden können, und wobei unterschiedliche Informationen mit der jeweiligen Notfall-Nachricht übertragen werden können. Teilzwecke können zum Beispiel darin bestehen, das Notfall-Signal kommunikationssicher auszusenden, insbesondere ohne Abhängigkeit von einem Kommunikationsnetz, Helfer in der Nachbarschaft zu erreichen oder besonders geeignete Helfer zu erreichen. Ferner kann eine Rückrufadresse und eine Aufforderung zum Rückruf mit gesendet werden. Auch können zum Beispiel positionsabhängige Konferenzschaltungen zwischen der Notfall-Kommunikationseinrichtung 30 und mehreren Empfangseinrichtungen der näheren Umgebung und/oder einer Zentrale der weiteren Umgebung aufgebaut werden.

In einer weiteren vorteilhaften Ausführungsform ist ferner vorgesehen, dass sich mehrere Notfall-Kommunikationseinrichtungen gegenseitig Notfall-Nachrichten empfangen können, um beispielsweise gleichartige Notfall-Nachrichten wie zum Beispiel eine Rauchmeldung, d.h. eine Notfall-Nachricht, deren Aussendung durch einen Rauchsensor ausgelöst wurde, überprüfen zu können.

Besonders vorteilhaft können Notfall-Nachrichten mehrerer Notfall-Kommunikationseinrichtungen gemeinsam von einer Empfangseinrichtung empfangen werden, wobei dies eine an einem festen Ort installierte zentrale Einrichtung oder eine bewegliche Empfangseinrichtung der näheren Umgebung sein kann, und wobei die Notfall-Nachrichten insbesondere Informationen zur Position der jeweiligen Notfall-Kommunikationseinrichtung, der Gleichartigkeit der Notfall-Nachricht innerhalb eines Zeitbereiches umfassen und von der Empfangseinrichtung ausgewertet werden, um die einzelnen Information zu verifizieren und/oder eine Inter- oder Extrapolation abzuleiten oder weitere Verarbeitungsschritte einzuleiten oder durchzuführen.

Ein möglicher Einsatzzweck besteht zum Beispiel darin, in Abhängigkeit der empfangenen Informationen dynamisch angepasste Evakuierungspläne zu erstellen, insbesondere innerhalb eines Gebäudes, und ein Evakuierungsrouting durchzuführen, wobei zu diesem Zweck vorzugsweise Navigationsinformationen zur Evakuierung an die einzelnen Notfall-Kommunikationseinrichtung von der Empfangseinrichtung gesendet werden. Es kann vorteilhaft auch ein zusätzlicher Abgleich der von den beweglichen Notfall-Kommunikationseinrichtungen empfangenen Informationen mit ortfesten Sensoren wie zum Beispiel Rauchmeldern erfolgen, wobei zu diesem Zweck insbesondere ein zentraler Server eingesetzt wird.

Ein wesentlicher Aspekt der Erfindung ist neben der geeigneten Navigationsführung auch der Verfahrensablauf bis zum Auffinden der Notfall-Kommunikationseinrichtung. Ausgewählte Elemente eines möglichen beispielhaften Verfahrensablaufes sind im Folgenden angegeben, wobei diese einzeln ausgeführt oder auf geeignete Weise kombiniert werden können:
a) Auslösung des Notfalls manuell durch Eingabe des Nutzers der Notfall-Kommunikationseinrichtung oder automatisch, beispielsweise in Abhängigkeit von gemessenen Umgebungsvariablen.
b) Entscheidung über den weiteren Ablauf des Verfahrens in Abhängigkeit des Notfallgrundes und weiterer Aspekte wie die aktuelle Positionsgenauigkeit oder Nutzerdaten einer Vorkonfiguration.
c) Broadcast Kommunikation durch Aussenden des Notfall-Signals für die nähere Umgebung mittels kommunikationssicherer Übermittlung und Ermöglichung von relativer Ortungsinformation durch eine Empfangseinrichtung in der Nähe, zum Beispiel bis zu 200 Meter.
d) Dedizierte Kommunikation an vorkonfigurierte Empfänger, wie zum Beispiel eine Notrufzentrale, ein Arzt oder eine Privatperson, in beliebiger Entfernung über Kommunikationsnetzwerke mit Infrastrukturbedarf.
e) Erkennung des Notfalls und der Position durch Netzfeature des Kommunikationsnetzes, zum Beispiel auf Basis der jeweiligen Funkzelle, oder durch Übermittlung der Position durch die zur Eigenortung ausgebildete Notfall-Kommunikationseinrichtung.
f) Aufbau von Konferenzschaltungen mit positionsabhängigen Teilnehmern, d.h. Teilnehmern, die aufgrund ihrer aktuellen Position relativ zur Notfall-Kommunikationseinrichtung ausgewählt werden, oder mit Teilnehmern, die aufgrund ihrer vordefinierten Funktion wie Arzt oder Notrufzentrale ausgewählt werden, oder mit Teilnehmern, die aufgrund einer Kombination von Eigenschaften auf Basis einer Vorkonfiguration ausgewählt werden, zum Beispiel ein Arzt, der in der näheren Umgebung, beispielsweise in bis zu 200 Meter Entfernung, privat unterwegs ist. Zum Durchführen der Auswahl können beispielsweise mobile Kommunikationseinrichtungen der näheren Umgebung, wenn diese das Notfall-Signal empfangen, zum Beispiel ihre Position und MSISDN an die Notfall-Kommunikationseinrichtung senden, da das Notfall-Signal zum Beispiel die MSISDN der Notfall-Kommunikationseinrichtung enthält und gegebenenfalls auch deren Position.
g) Navigation zu der Notfall-Kommunikationseinrichtung unter Verwendung bekannter Navigationsverfahren und/oder durch die Erfindung vorgeschlagene Navigationsverfahren, zum Beispiel von benachbarten Kommunikationseinrichtungen oder von Helfern aus einer Zentrale, wobei eine definierte Gruppe zusätzlich eine permanente Konferenzschaltung unterhalten kann, und wobei die Navigation in der Nähe der Notfall-Kommunikationseinrichtung zusätzlich durch akustische Signale unterstützt werden kann, welche die Notfall-Kommunikationseinrichtung aussendet.
h) Verarbeitung von Notfall-Signalen mehrerer unterschiedlicher Notfall-Kommunikationseinrichtungen mit gleichartiger und sich stützender Information in einer Zentrale und Ableitung einer Reaktion hierauf mit Auswirkung auf die Kommunikationseinrichtungen in der Umgebung der Notfall-Kommunikationseinrichtungen inklusive der Notfall-Kommunikationseinrichtungen selbst, zum Beispiel durch Berechnung und Zusendung von Evakuierungsrouten.

Das erfindungsgemäße Verfahren zur Notfallbenachrichtigung ist in verschiedenen Gebieten vorteilhaft einsetzbar, zum Beispiel zum Auffinden eines oder mehrerer Lawinenopfer, für das Senden einer Notfall-Nachricht durch eine alte Person zur schnellen Bereitstellung von Hilfe aus der näheren Umgebung, oder auch zur Auswertung mehrerer gleichartiger Notfall-Nachrichten der näheren Umgebung und zur Bereitstellung von Hilfe zur Evakuierung.

## Patentansprüche

1. Verfahren zur Notfallbenachrichtigung, mit den Schritten:
- Bereitstellen wenigstens einer zur Kommunikation über ein Kommunikationsnetzwerk (500) ausgebildeten, beweglichen Notfall-Kommunikationseinrichtung (30), welche einen Notfallsender (34) umfasst, der zum Aussenden eines von dem Kommunikations-Netzwerk (500) unabhängigen Notfall-Signals ausgebildet ist,
- Aussenden eines Notfall-Signals durch den Notfallsender (34) unter Ansprechen auf eine Aktivierung des Notfallsenders (34),
- Empfangen des Notfall-Signals durch wenigstens eine Empfangseinrichtung (40),
- Ermitteln einer relativen Ortsinformation der beweglichen Notfall-Kommunikationseinrichtung (30) zur Empfangseinrichtung (40) durch die Empfangseinrichtung (40) in Abhängigkeit des empfangenen Notfall-Signals, wobei die Empfangseinrichtung (40) als bewegliche Kommunikationseinrichtung ausgebildet ist,
**dadurch gekennzeichnet, dass**
die Empfangseinrichtung (40) in Abhängigkeit der ermittelten relativen Ortsinformation Navigationsinformationen erzeugt und ausgibt, die es einem Nutzer der Empfangseinrichtung (40) ermöglichen, zu der Notfall-Kommunikationseinrichtung (30) zu navigieren.

2. Verfahren nach Anspruch 1, wobei das Ermitteln der relativen Ortsinformation das Durchführen einer Funkpeilung in Abhängigkeit des empfangenen Notfall-Signals umfasst.

3. Verfahren nach Anspruch 2, wobei die Funkpeilung durch wenigstens zwei Empfangseinrichtungen (40) durchgeführt wird und/oder die Funkpeilung wenigstens zwei zu unterschiedlichen Zeitpunkten und an unterschiedlichen Orten durchgeführte Funkpeilungsmessungen umfasst.

4. Verfahren nach einem der vorstehenden Ansprüche, wobei die Empfangseinrichtung (40) ein Bestätigungssignal zur Notfall-Kommunikationseinrichtung (30) überträgt, dass das Notfall-Signal empfangen wurde.

5. Verfahren nach einem der vorstehenden Ansprüche, ferner umfassend die Schritte:
- Ermitteln einer absoluten Ortsinformation der Position der Notfall-Kommunikationseinrichtung (30) durch die Notfall-Kommunikationseinrichtung (30), und
- Übertragen der ermittelten absoluten Ortsinformation zur Empfangseinrichtung (40) mittels des Notfall-Signals.

6. Verfahren nach Anspruch 5, wobei die Empfangseinrichtung (40) eine absolute Ortsinformation der eigenen Position ermittelt und in Abhängigkeit der eigenen absoluten Ortsinformation und der mit dem Notfall-Signal übertragenen absoluten Ortsinformation der Notfall-Kommunikationseinrichtung (30) die relative Ortsinformation der Notfall-Kommunikationseinrichtung (30) zur Empfangseinrichtung (40) ermittelt und/oder eine mittels Funkpeilung ermittelte relative Ortsinformation anpasst, wobei eine Anpassung insbesondere mittels einer Ausgleichungsrechnung erfolgt.

7. Verfahren nach einem der vorstehenden Ansprüche, wobei die Aktivierung des Notfallsenders (34) automatisch in Abhängigkeit einer von einem Sensor (37) der Notfall-Kommunikationseinrichtung (30) detektierten Umgebungsvariablen erfolgt.

8. Verfahren nach einem der vorstehenden Ansprüche, wobei die Notfall-Kommunikationseinrichtung (30) unter Ansprechen auf eine Aktivierung des Notfallsenders (34) oder unter Ansprechen darauf, dass nach einer vorgegebenen Zeitdauer kein Bestätigungssignal einer Empfangseinrichtung (40) empfangen wurde, dass das Notfall-Signal empfangen wurde, eine Notfall-Nachricht über das Kommunikations-Netzwerk (500) zu einer Empfangseinrichtung (40) überträgt.

9. Verfahren nach einem der vorstehenden Ansprüche, wobei das Notfall-Signal und/oder die Notfall-Nachricht eine Identifikationsinformation umfasst, welche die Notfall-Kommunikationseinrichtung (30) eindeutig identifiziert.

10. Verfahren nach Anspruch 9, wobei die Empfangseinrichtung (40) unter Verwendung der Identifikationsinformation eine Kommunikationsverbindung zu der Notfall-Kommunikationseinrichtung (30) aufbaut.

11. Verfahren nach einem der Ansprüche 9 oder 10, wobei das Notfall-Signal und/oder die Notfall-Nachricht eine Identifikationsinformation wenigstens zweier Kommunikationsteilnehmer umfasst, und wobei die Empfangseinrichtung (40) eine Kommunikation zwischen der Notfall-Kommunikationseinrichtung (30) und den wenigstens zwei Kommunikationsteilnehmern initiiert.

12. Verfahren nach einem der vorstehenden Ansprüche, wobei
- die Empfangseinrichtung (40) von unterschiedlichen Notfall-Kommunikationseinrichtungen (30) Notfall-Signale empfängt, wobei jedes Notfall-Signal eine Identifikationsinformation umfasst, welche die Notfall-Kommunikationseinrichtung (30) eindeutig identifiziert, die das jeweilige Notfall-Signal gesendet hat,
- die Empfangseinrichtung (40) in Abhängigkeit der empfangenen Notfall-Signale wenigstens einen Gefahrenbereich ermittelt,
- die Empfangseinrichtung Navigationsinformationen für wenigstens eine Notfall-Kommunikationseinrichtung (30) erzeugt, die es einem Nutzer der Notfall-Kommunikationseinrichtung (30) ermöglichen, aus dem ermittelten Gefahrenbereich zu navigieren, und
- die Empfangseinrichtung (40) zu der wenigstens einen Notfall-Kommunikationseinrichtung (30) unter Verwendung der jeweiligen Identifikationsinformation eine Kommunikationsverbindung aufbaut und die erzeugten Navigationsinformationen überträgt.

13. Empfangseinrichtung (40), umfassend
- einen Empfänger (44) zum Empfangen eines von einer beweglichen, zur Kommunikation über ein Kommunikationsnetzwerk (500) ausgebildeten Notfall-Kommunikationseinrichtung (30) ausgesandten Notfall-Signals, wobei
die Notfall-Kommunikationseinrichtung (30) einen Notfall-Sender (34) zum Aussenden eines Notfall-Signals unabhängig von dem Kommunikationsnetzwerk (500), einen Mikroprozessor (38), und einen Programm-Speicher (32) mit einem darin gespeicherten Programm, welches insbesondere dazu ausgebildet ist, die durch die Notfall-Kommunikationseinrichtung (30) auszuführenden Verfahrensschritte eines Verfahrens gemäß einem der Ansprüche 1 bis 12 auszuführen, wenn es durch den Mikroprozessor (38) ausgeführt wird, und wobei die Empfangseinrichtung (40) dazu ausgebildet ist, in Abhängigkeit eines empfangenen Notfall-Signals eine relative Ortsinformation der Notfall-Kommunikationseinrichtung (30) zur Empfangseinrichtung (40) zu ermitteln,
- einen Mikroprozessor (38'), und
- einen Programm-Speicher (32') mit einem darin gespeicherten Programm, welches insbesondere dazu ausgebildet ist, die durch die Empfangseinrichtung (40) auszuführenden Verfahrensschritte eines Verfahrens gemäß einem der Ansprüche 1 bis 12 auszuführen, wenn es durch den Mikroprozessor (38') ausgeführt wird.

## Claims

1. A method for emergency messaging, comprising the steps of:
- providing at least one mobile emergency communication device (30) adapted for communication via a communication network (500), which comprises an emergency transmitter (34) that is adapted to transmit an emergency signal independent of the communication network (500);
- emitting an emergency signal by the emergency transmitter (34) in response to an activation of the emergency transmitter (34);
- receiving the emergency signal by at least one receiving device (40);
- determining a relative location information of the mobile emergency communication device (30) relative to the receiving device (40) by the receiving device (40) on the basis of the received emergency signal, wherein the receiving device (40) is configured as a mobile communication device;
**characterized in that**
on the basis of the determined relative location information, the receiving device (40) generates and outputs navigation information enabling a user of the receiving device (40) to navigate to the emergency communication device (30).

2. The method according to claim 1, wherein the determining of the relative location information comprises performing radio direction finding on the basis of the received emergency signal.

3. The method according to claim 2, wherein said radio direction finding is performed by at least two receiving devices (40), and/or wherein said radio direction finding comprises at least two radio direction finding measurements performed at different times and at different locations.

4. The method according to any one of the preceding claims, wherein the receiving device (40) transfers an acknowledgment signal to the emergency communication device (30) indicating that the emergency signal has been received.

5. The method according to any one of the preceding claims, further comprising the steps of:
- determining an absolute location information of the position of the emergency communication device (30) by the emergency communication device (30); and
- transferring the determined absolute location information to the receiving device (40) via the emergency signal.

6. The method according to claim 5, wherein the receiving device (40) determines an absolute location information of its own position and determines the relative location information of the emergency communication device (30) on the basis of its own absolute location information and of the absolute location information of the emergency communication device (30) transferred together with the emergency signal, and/or adjusts a relative location information determined by radio direction finding, wherein an adjustment is performed in particular by using an adjustment theory.

7. The method according to any one of the preceding claims, wherein the activation of the emergency transmitter (34) occurs automatically in response to an environmental variable as detected by a sensor (37) of the emergency communication device (30).

8. The method according to any one of the preceding claims, wherein the emergency communication device (30) is responsive to an activation of the emergency transmitter (34) or to a lack of receiving an acknowledgment signal from a receiving device (40) indicating that the emergency signal has been received within a predetermined period of time, to transmit an emergency message to a receiving device (40) via the communication network (500).

9. The method according to any one of the preceding claims, wherein the emergency signal and/or the emergency message comprises identification information unambiguously identifying the emergency communication device (30).

10. The method according to claim 9, wherein the receiving device (40) establishes a communication link to the emergency communication device (30) using the identification information.

11. The method according to any one of claims 9 or 10, wherein the emergency signal and/or the emergency message comprises identification information of at least two communication subscribers, and wherein the receiving device (40) initiates communication between the emergency communication device (30) and the at least two communication subscribers.

12. The method according to any one of the preceding claims, wherein:
- the receiving device (40) receives emergency signals from different emergency communication devices (30), each emergency signal comprising identification information unambiguously identifying the emergency communication device (30) that has transmitted the respective emergency signal;
- the receiving device (40) determines at least one dangerous zone on the basis of the received emergency signals;
- the receiving device generates navigation information for at least one emergency communication device (30) enabling a user of the emergency communication device (30) to navigate out of the determined dangerous zone; and
- the receiving device (40) establishes a communication link to the at least one emergency communication device (30) using the respective identification information, and transmits the generated navigation information.

13. A receiving device (40), comprising:
- a receiver (44) for receiving an emergency signal emitted by a mobile emergency communication device (30) that is adapted for communication via a communication network (500), wherein said emergency communication device (30) comprises an emergency transmitter (34) for transmitting an emergency signal independently of the communication network (500), a microprocessor (38) and a program memory (32) having a program stored therein, which is in particular adapted, when executed by the microprocessor (38), to execute the method steps of a method according to any one of claims 1 to 12 to be carried out by said emergency communication device (30); and wherein the receiving device (40) is adapted to determine, on the basis of a received emergency signal, relative location information of the emergency communication device (30) relative to the receiving device (40);
- a microprocessor (38'); and
- a program memory (32') having a program stored therein, which is in particular adapted, when executed by the microprocessor (38'), to execute the method steps of a method according to any one of claims 1 to 12 to be carried out by the receiving device (40).

## Revendications

1. Procédé de signalisation d'urgence, comprenant les étapes de :
- mise à disposition d'au moins un dispositif de communication d'urgence (30) mobile, adapté pour la communication par le biais d'un réseau de communication (500), qui comprend un émetteur d'urgence (34), qui est adapté pour l'émission d'un signal d'urgence indépendant du réseau de communication (500),
- émission d'un signal d'urgence par le biais de l'émetteur d'urgence (34) en réponse à une activation de l'émetteur d'urgence (34),
- réception du signal d'urgence par au moins un dispositif de réception (40),
- détermination d'une information de localisation relative du dispositif de communication, d'urgence (30) mobile par rapport au dispositif de réception (40) par le dispositif de réception (40) en fonction du signal d'urgence reçu, le dispositif de réception (40) étant adapté sous forme de dispositif de communication mobile,
**caractérisé en ce que** le dispositif de réception (40) produit et délivre des informations de navigation en fonction de l'information de localisation relative déterminée, qui permettent à un utilisateur du dispositif de réception (40) de naviguer par rapport au dispositif de communication d'urgence (30).

2. Procédé selon la revendication 1, dans lequel la détermination de l'information de localisation relative comprend la réalisation d'une radiogoniométrie en fonction du signal d'urgence reçu.

3. Procédé selon la revendication 2, dans lequel la radiogoniométrie est réalisée par au moins deux dispositifs de réception (40) et/ou la radiogoniométrie comprend au moins deux mesures de radiogoniométrie réalisées à différents moments et à différents endroits.

4. Procédé selon l'une des revendications précédentes, dans lequel le dispositif de réception (40) transfère un signal d'actionnement au dispositif de communication d'urgence (30) selon lequel le signal d'urgence a été reçu.

5. Procédé selon l'une des revendications précédentes, comprenant en outre les étapes de :
- détermination d'une information de localisation absolue de la position du dispositif de communication d'urgence (30) par le dispositif de communication d'urgence (30), et
- transfert de l'information de localisation absolue déterminée au dispositif de réception (40) au moyen du signal d'urgence.

6. Procédé selon la revendication 5, dans lequel le dispositif de réception (40) détermine une information de localisation absolue de la propre position et détermine l'information de localisation relative du dispositif de communication d'urgence (30) par rapport au dispositif de réception (40) en fonction de la propre information de localisation absolue et de l'information de localisation absolue du dispositif de communication d'urgence (30), transférée avec le signal d'urgence, et/ou adapte une information de localisation relative déterminée au moyen de la radiogoniométrie, une adaptation s'effectuant en particulier au moyen d'une équation de compensation.

7. Procédé selon l'une des revendications précédentes, dans lequel l'activation de l'émetteur d'urgence (34) s'effectue automatiquement en fonction d'une variable environnementale détectée par un capteur (37) du dispositif de communication d'urgence (30).

8. Procédé selon l'une des revendications précédentes, dans lequel le dispositif de communication d'urgence (30) transfère un message d'urgence à un dispositif de réception (40) par le biais du réseau de communication (500) en réponse à une activation de l'émetteur d'urgence (34) ou en réponse à la réception, après une durée prédéterminée, d'aucun signal de confirmation d'un dispositif de réception (40) selon lequel le signal d'urgence a été reçu.

9. Procédé selon l'une des revendications précédentes, dans lequel le signal d'urgence et/ou le message d'urgence comprend une information d'identification qui identifie clairement le dispositif de communication d'urgence (30).

10. Procédé selon la revendication 9, dans lequel le dispositif de réception (40) établit une liaison de communication par rapport au dispositif de communication d'urgence en utilisant l'information d'identification.

11. Procédé selon l'une des revendications 9 ou 10, dans lequel le signal d'urgence et/ou le message d'urgence comprend une information d'identification d'au moins deux participants à une communication, et dans lequel le dispositif de réception (40) initie une communication entre le dispositif de communication d'urgence (30) et les au moins deux participants à une communication.

12. Procédé selon l'une des revendications précédentes, dans lequel :
- le dispositif de réception (40) reçoit des signaux d'urgence de différents dispositifs de communication d'urgence (30), chaque signal d'urgence comprenant une information d'identification, qui identifie clairement le dispositif de communication d'urgence (30), qui a émis le signal d'urgence respectif,
- le dispositif de réception (40) détermine au moins une zone de danger en fonction des signaux d'urgence reçus,
- le dispositif de réception produit des informations de navigation pour au moins le dispositif de communication d'urgence (30), qui permettent à un utilisateur du dispositif de communication d'urgence (30) de naviguer à partir de la zone de danger déterminée, et
- le dispositif de réception (40) établit une liaison de communication par rapport à au moins un dispositif de communication d'urgence (30) en utilisant l'information d'identification respective et transfère les informations de navigation produites.

13. Dispositif de réception (40), comprenant :
- un récepteur (44) pour la réception d'un signal d'urgence émis par un dispositif de communication d'urgence (30) mobile, adapté pour la communication par le biais d'un réseau de communication (500),
le dispositif de communication d'urgence (30) comprenant un émetteur d'urgence (34) pour transmettre un signal d'urgence indépendamment du réseau de communication (500), un microprocesseur (38) et une mémoire de programme (32) dans laquelle est enregistré un programme, lequel est en particulier adapté pour exécuter les étapes de procédé d'un procédé selon l'une quelconque des revendications 1 à 12 à exécuter par le dispositif de communication d'urgence (30) lorsqu'il est exécuté par le microprocesseur (38), et le dispositif de réception (40) étant adapté pour déterminer une information de localisation relative du dispositif de communication d'urgence (30) par rapport au dispositif de réception (40) en fonction d'un signal d'urgence reçu,
- un microprocesseur (38'), et
- une mémoire de programme (32') dans laquelle est enregistré un programme, lequel est en particulier adapté pour exécuter les étapes de procédé d'un procédé selon l'une des revendications 1 à 12 à exécuter par le dispositif de réception (40), lorsqu'il est exécuté par le microprocesseur (38').
